# EUROPEAN PATENT APPLICATION

(11) **EP 4 574 603 A1**
(43) Date of publication of application: **25.06.2025**
(21) Application number: 24217818.4
(22) Date of filing: 05.12.2024
(51) Int. Cl.: B60W 30/09, B60W 30/095, B60W 40/04, B60W 50/14

(54) **VEHICLE CONTROL DEVICE, VEHICLE CONTROL METHOD, AND VEHICLE CONTROL PROGRAM**

(30) Priority: 15.12.2023 JP 2023211978
(71) Applicant: TOYOTA JIDOSHA KABUSHIKI KAISHA, Toyota-shi Aichi 471-8571 (JP)
(72) Inventor: ISHIKAWA, Tohru, TOYOTA-SHI, AICHI, 471-8571 (JP); SAIMURA, Kazuya, TOYOTA-SHI, AICHI, 471-8571 (JP)
(74) Representative: Cabinet Beau de Loménie

(57) **Abstract**

The vehicle control device includes an onboard sensor for acquiring information related to an object (OB) present around the own vehicle, and a processor capable of executing risk reduction processing to control the own vehicle in a way that reduces the risk of contact with the object based on the acquired information. The processor initiates the risk reduction processing in a specific scene (S), where there is a blind spot area (BA) in the field of view of the onboard sensor 20, caused by the presence of a preceding vehicle (V1) traveling in the same direction as the own vehicle and positioned in the region diagonally ahead of the own vehicle, making it impossible for the onboard sensor to detect the object (OB). The risk reduction processing is triggered when the preceding vehicle (V1) decelerates, and the cause of the deceleration cannot be detected.

## Description

### BACKGROUND

The present invention relates to a vehicle control device, a vehicle control method, and a vehicle control program for reducing the contact risk between an own vehicle and an object.

### DESCRIPTION OF THE RELATED ART

Vehicle control devices equipped with a function to reduce the contact risk between an own vehicle and an object have been proposed (for example, see Patent Document 1 below). This vehicle control device (hereinafter referred to as the "conventional device") includes vehicle-mounted sensors such as cameras and radar. The vehicle control device obtains information such as the distance between the own vehicle and the object and the relative velocity vector, and based on this information, predicts (calculates) the time until contact is expected to occur between the own vehicle and the object. If the predicted time is below a threshold value, the conventional device executes deceleration processing to control the braking system of the own vehicle, so that the own vehicle decelerates (automatic deceleration function).

[Patent Document 1] Japanese Unexamined Patent Publication No. 2017-154683

### SUMMARY

For example, a specific scene can be envisioned where another vehicle (hereinafter referred to as the "preceding vehicle") traveling in the same direction as the own vehicle in an adjacent lane is located within the field of view (detection range) of the vehicle-mounted sensor of the own vehicle. In this specific scene, the vehicle-mounted sensor cannot detect an object located in a region farther away from the own vehicle than the preceding vehicle (hereinafter referred to as the "blind spot area"). If an object moves from the blind spot area into the forward area of the own vehicle, the vehicle-mounted sensor will be able to detect the object, but at that point, the predicted time until contact between the own vehicle and the object may become significantly smaller than the threshold. As a result, even if the conventional device starts the deceleration processing from that point, there is a concern that the contact risk between the own vehicle and the object may not be sufficiently reduced.

One of the objectives of the present invention is to provide a vehicle control device equipped with a risk reduction function for reducing the contact risk between the own vehicle and an object, and to sufficiently reduce the contact risk in a specific scene where the conventional device could not adequately reduce the contact risk.

To solve the above problem, the vehicle control device of the present invention comprises:
a vehicle-mounted sensor for obtaining information about objects present around the own vehicle; and
a processor capable of executing risk reduction processing to control the own vehicle so that the contact risk between the own vehicle and the object is reduced based on the information.

The processor is configured to, in a specific scene where a blind spot area exists because a preceding vehicle traveling in the same direction as the own vehicle is located in an area in front of the own vehicle and within the field of view of the vehicle-mounted sensor, determine that the first specific condition for judging that the preceding vehicle is decelerating rapidly is satisfied, and that the second specific condition for judging that the cause of the preceding vehicle's deceleration cannot be detected is satisfied, and to start the risk reduction processing when these conditions are met.

To solve the above problem, the vehicle control method of the present invention includes:
an information acquisition step for obtaining information about objects present around the own vehicle using a vehicle-mounted sensor; and
a risk reduction step for executing risk reduction processing to control the own vehicle so that the contact risk between the own vehicle and the object is reduced based on the information.

The risk reduction step includes a start step for starting the risk reduction processing in a specific scene where a blind spot area exists because a preceding vehicle traveling in the same direction as the own vehicle is present in front of the own vehicle and within the field of view of the vehicle-mounted sensor, and the first specific condition, which determines that the preceding vehicle is decelerating rapidly, is satisfied, and the second specific condition, which determines that the cause of the preceding vehicle's deceleration cannot be detected, is satisfied.

To solve the above problem, a vehicle control program of the present invention is stored in a computer provided in the own vehicle and causes the computer to execute:
an information acquisition step for obtaining information about objects present around the own vehicle using a vehicle-mounted sensor; and
a risk reduction step for executing risk reduction processing to control the own vehicle so that the contact risk between the own vehicle and the object is reduced based on the information.

The risk reduction step includes a start step for starting the risk reduction processing in a specific scene where a blind spot area exists because a preceding vehicle traveling in the same direction as the own vehicle is present in front of the own vehicle and within the field of view of the vehicle-mounted sensor, and the first specific condition, which determines that the preceding vehicle is decelerating rapidly, is satisfied, and the second specific condition, which determines that the cause of the preceding vehicle's deceleration cannot be detected, is satisfied.

In the specific scene mentioned above, when the preceding vehicle is decelerating rapidly, and the cause of this deceleration cannot be detected, there is a high possibility that an object (such as a pedestrian or a bicycle as a moving entity) exists in the blind spot area as the cause. Furthermore, there is a high likelihood that this object will proceed into the forward area of the own vehicle. Therefore, in the present invention, the processor starts the risk reduction processing when the preceding vehicle is decelerating rapidly in the specific scene, and the cause cannot be detected (when the first specific condition is satisfied, and the second specific condition is also satisfied). In other words, even if the processor has not directly detected an object likely to come into contact with the own vehicle, it starts the risk reduction processing based on the behavior of the preceding vehicle and the surrounding conditions when it can determine that the situation is one where an object is highly likely to proceed from the blind spot area to the forward area of the own vehicle. Therefore, the processor can initiate the risk reduction processing earlier (even before detecting the object) than conventional methods when specific conditions are met in a specific scene. Consequently, according to the present invention, it is possible to sufficiently reduce the contact risk in a specific scene where conventional devices could not adequately reduce the contact risk.

In the vehicle control device according to one aspect of the present invention, the risk reduction processing, in a specific scene where the first specific condition and the second specific condition are satisfied, includes:
a first process for controlling a notification device to enhance the driver's responsiveness to an object that has proceeded from the blind spot area into the forward area where the vehicle-mounted sensor can detect the object;
a second process for controlling a braking device to enhance the responsiveness of the own vehicle's body to a braking operation, which is assumed to be manually or automatically executed, triggered by the object proceeding from the blind spot area to the forward area; and
a third process for controlling a steering device to enhance the responsiveness of the own vehicle's body to a steering angle change operation, which is assumed to be manually or automatically executed, triggered by the object proceeding from the blind spot area to the forward area.

When the first specific condition and the second specific condition are satisfied in a specific scene, the execution of the first process enhances the driver's responsiveness to an object that has proceeded from the blind spot area into the forward area of the own vehicle. In other words, the time required for the driver to recognize the object that has proceeded from the blind spot area into the forward area is reduced compared to when the first process is not executed. Consequently, the timing for initiating manual driving operations (actions to avoid contact between the own vehicle and the object) is advanced.

Furthermore, when an object proceeds from the blind spot area into the forward area of the own vehicle, it is assumed that the driver will manually execute driving operations to avoid the object. Additionally, the processor may be configured to automatically execute these driving operations. By executing the second process as a preparatory step before the braking operation as part of the driving operations, the responsiveness of the own vehicle to the braking operation is enhanced. In other words, the time from the braking operation to when the own vehicle begins to decelerate is reduced compared to when the second process is not executed.

Additionally, by executing the third process as a preparatory step before the steering angle change operation as part of the driving operations, the responsiveness of the own vehicle to the steering angle change operation is enhanced. In other words, the time from the steering angle change operation to when the own vehicle's steering angle begins to change is reduced compared to when the third process is not executed.

In the vehicle control device according to another aspect of the present invention, the first process includes a process of presenting information to the driver of the own vehicle indicating a high possibility that an object will proceed from the blind spot area into the forward area.

According to this, the driver can recognize the high possibility that an object will proceed from the blind spot area into the forward area of the own vehicle. Therefore, the driver's focus on driving operations (attentiveness to the blind spot area and its surrounding area) is enhanced.

In the vehicle control device according to another aspect of the present invention, the braking device includes a brake mechanism for applying braking force to the wheels of the own vehicle and a brake actuator for driving the brake mechanism, and the second process includes a process of driving the brake actuator before a braking operation, which is assumed to be manually or automatically executed, so that braking force is not applied to the wheels.

In this case, under conditions where the second process is executed, the driver cannot visually confirm the object obstructing the progression of the own vehicle. If the own vehicle is automatically braked under these conditions, the driver may feel discomfort with the automatic braking. In the second process of the vehicle control device according to this aspect, the processor drives the brake actuator to a degree that does not decelerate the own vehicle. In other words, the brake actuator is controlled such that it is in a state where it can immediately drive the brake mechanism, or the brake mechanism is in a state where it can immediately generate braking force (the play of the brake mechanism is "0" or minimal). Therefore, according to the vehicle control device of this aspect, the discomfort felt by the driver can be suppressed.

In the vehicle control device according to another aspect of the present invention, the steering device includes a steering mechanism for changing the steering angle of the own vehicle and a steering actuator for driving the steering mechanism, and the third process includes a process of driving the steering actuator to a degree that does not change the steering angle before a steering angle change operation, which is assumed to be manually or automatically executed.

In the situation where the third process is executed, the driver cannot visually confirm the object obstructing the progression of the own vehicle. In this situation, if the own vehicle is automatically steered, the driver may feel discomfort with the automatic steering. In the third process of the vehicle control device according to this aspect, the processor drives the steering actuator to a degree that does not steer the own vehicle. In other words, the steering actuator is controlled such that it is in a state where it can immediately drive the steering mechanism, or the steering mechanism is in a state where it can immediately drive the steering wheels (the play in the steering mechanism is "0" or minimal). Therefore, according to the vehicle control device of this aspect, the discomfort felt by the driver can be suppressed.

In the vehicle control device according to another aspect of the present invention, the processor is configured to determine that the second specific condition is satisfied when at least one of the following situations applies:
a situation where there is no moving object in a predetermined area in front of the preceding vehicle,
a situation where there is no sign regulating the preceding vehicle's progression in the predetermined area, or
a situation where the turn signal of the preceding vehicle is not activated.

According to this, the processor can obtain information about objects located in front of the preceding vehicle or the behavior of the preceding vehicle from the vehicle-mounted sensor and, based on that information, can relatively easily determine whether the second specific condition is satisfied.

### BRIEF DESCRIPTION OF THE DRAWINGS

FIG. 1 is a block diagram of a vehicle control device according to one embodiment of the present invention.
FIG. 2 is a plan view showing the field of view of an object detection sensor and a blind spot area.
FIG. 3A is an example of an image displayed when the alert processing is executed.
FIG. 3B is an example of an image displayed when the cautionary processing is executed.
FIG. 4 is a plan view showing a scene where a pedestrian suddenly enters the forward area of both the preceding vehicle and the own vehicle.
FIG. 5 is a flowchart of a program executed to implement a function that controls the own vehicle in advance to prepare for an object suddenly appearing from a blind spot area.

### DESCRIPTION OF THE EMBODIMENTS

### (Summary)

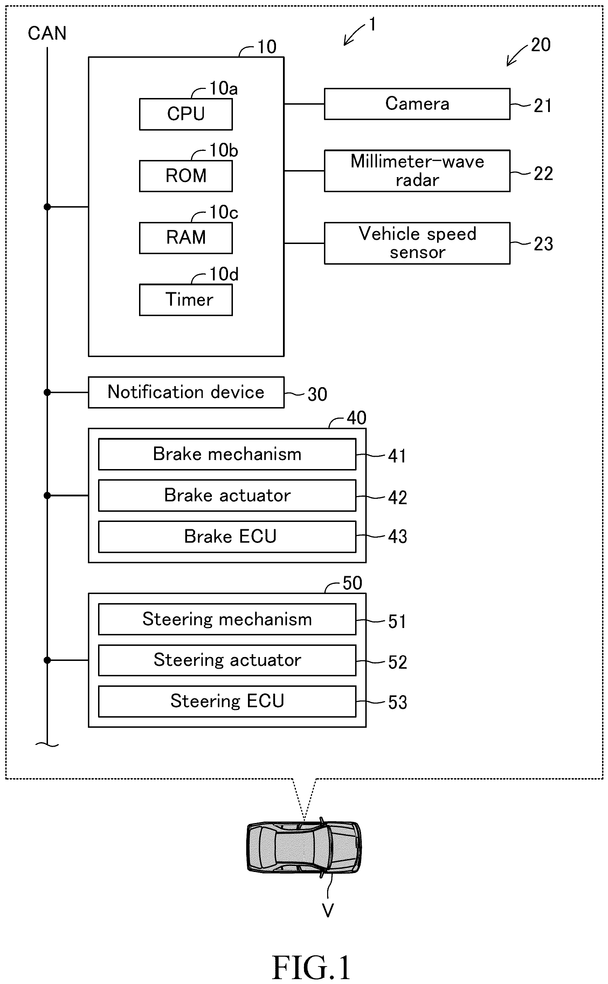

As shown in FIG. 1, a vehicle control device 1 according to one embodiment of the present invention is applied to a vehicle V equipped with an autonomous driving function (hereinafter referred to as "own vehicle"). The vehicle control device 1 has a risk reduction function that executes risk reduction processing to control the own vehicle (notification device 30, braking device 40, and steering device 50) to reduce the contact risk between the own vehicle and objects located around it, particularly when the autonomous driving function is disabled.

### (Specific configuration)

As shown in FIG. 1, the vehicle control device 1 includes an ECU 10, a vehicle-mounted sensor 20, a notification device 30, a braking device 40, and a steering device 50.

The ECU 10 includes a microcomputer comprising a CPU 10a, a ROM 10b (rewritable non-volatile memory), a RAM 10c, and a timer 10d. The CPU executes various functions by executing programs (instructions) stored in the ROM. The ECU 10 is connected to other ECUs via a Controller Area Network (CAN).

The vehicle-mounted sensor 20 includes an object detection sensor DS for detecting objects located in front of the own vehicle. The object detection sensor DS includes a camera 21 and a millimeter-wave radar 22.

The camera 21 is equipped with an imaging device and an image analysis device. The imaging device incorporates a CCD, for example. The imaging device is installed at the front of the own vehicle and directed forward. The imaging device captures the forward area of the own vehicle at a predetermined frame rate and obtains image data. The image analysis device acquires the image data from the imaging device, analyzes it, and recognizes (identifies) objects within the field of view. For example, the image analysis device recognizes lane markings (lane demarcation lines). The image analysis device also recognizes a preceding vehicle V1 located in the adjacent lane L2 in front of the own vehicle's lane L1 (in the diagonally forward area of the own vehicle). Additionally, it recognizes traffic signs (such as traffic lights or stop signs). The image analysis device provides the recognition results (object identification results) to the ECU 10.

The millimeter-wave radar 22 includes a transmission/reception unit and a signal processing unit. The transmission/reception unit emits millimeter waves (hereinafter referred to as "millimeter waves") into the surrounding area of the own vehicle (the forward area of the own vehicle) and receives the millimeter waves reflected from three-dimensional objects (e.g., objects located in lane L2). The signal processing unit obtains various information about the reflection points of the millimeter waves based on physical quantities such as the time between emission and reception of the waves, the attenuation level of the reflected waves, and the frequency difference between the emitted and reflected waves. For example, the signal processing unit calculates the position of each reflection point (relative to the transmission/reception unit in terms of direction and distance). The signal processing unit also calculates the speed of each reflection point relative to the own vehicle (relative speed vector vr). The processing results (data indicating the distribution of reflection points, including the position and speed of each reflection point) are provided to the ECU 10.

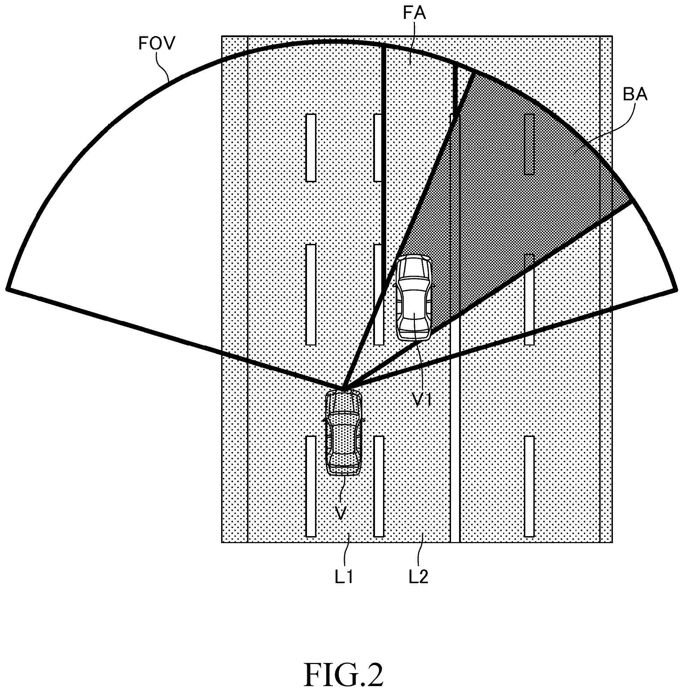

Here, the field of view (imaging range) of the camera 21 overlaps with the field of view (area where millimeter waves are emitted) of the millimeter-wave radar 22. In the following description, the overlapping area of both is referred to as the field of view (FOV) of the object detection sensor DS. As shown in FIG. 2, the FOV forms a fan shape in a plan view. Based on the fusion information obtained by integrating the data from the camera 21 and the millimeter-wave radar 22, the ECU 10 can acquire information about the object OB in the FOV (such as the type of object-pedestrian, vehicle, etc.-the position of the object relative to the own vehicle, and the speed of the object relative to the own vehicle).

The vehicle-mounted sensor 20 also includes a speed sensor 23. The speed sensor 23 consists of a rotational speed measurement circuit and a speed calculation device. The rotational speed measurement circuit includes a pulse generation circuit that outputs a pulse (electric signal) every time the wheels of the own vehicle rotate by a certain angle and a counter circuit that counts the number of pulses. The speed calculation device obtains the output value (number of pulses) from the counter circuit at regular intervals (for example, every unit of time) and resets the count value to "0." In this way, the speed calculation device obtains the wheel rotation speed N (number of wheel rotations per unit time). By multiplying the rotational speed N by a coefficient k, the speed calculation device calculates the vehicle speed vs (the forward/rearward speed of the own vehicle). The speed calculation device provides the calculated speed vs to the ECU 10. Based on the relative speed between the preceding vehicle V1 and the own vehicle (vector) obtained from the millimeter-wave radar 22 and the speed vs obtained from the speed sensor 23, the ECU 10 can calculate the speed vs1 of the preceding vehicle V1 (its speed relative to the road surface).

The notification device 30 includes a display device and an audio device. The display device is, for example, placed on the instrument panel (near the speedometer). The display device shows images based on image display commands received from the ECU 10. The audio device plays sounds based on audio playback commands received from the ECU 10.

The braking device 40 applies braking force to the wheels. The braking device 40 includes a brake mechanism (brake caliper) 41, a brake actuator 42, and a brake ECU 43. The brake mechanism 41 includes brake pads pressed against the brake discs attached to the wheels. The brake actuator 42 is a hydraulic actuator consisting of a cylinder, piston, reservoir, oil pump, various valve devices, and a hydraulic sensor (not shown). The brake pads are connected to the tip of the piston.

When the driver presses the brake pedal (not shown) of the own vehicle (manual braking operation), the ECU 10 sends a braking command (target braking force value) corresponding to the degree of pedal depression to the brake ECU 43. Additionally, when the brake pedal is not pressed, the ECU 10 can send a predetermined braking command (target braking force value) to the brake ECU 43 if certain conditions are met. In other words, automatic braking is executed when the predetermined conditions are satisfied.

The brake ECU 43 determines (calculates) the target hydraulic pressure in the brake actuator 42's cylinder based on the command (target braking force value) received from the ECU 10. The brake ECU 43 controls the oil pump so that the output from the hydraulic sensor matches the target value. This drives the brake pads via the brake actuator 42. As a result, the braking force (friction between the brake pads and brake discs) matches the target value.

Here, when the brake actuator 42 is not operating (when the target braking force is "0"), a gap (play) may exist between the brake pads and the brake discs. In this state, if the ECU 10 sends a command to the brake ECU 43 to generate braking force, it takes a little time to narrow the gap between the brake pads and the brake discs until they make contact. Therefore, to shorten the time between sending the braking command from the ECU 10 to the brake ECU 43 and the contact of the brake pads with the brake discs (the time until braking force begins to be generated), the ECU 10 can send a command (play compensation command) to the brake actuator 42 to control it so that the brake pads lightly touch the brake discs (with "0" or minimal braking force) when the target braking force is "0." This process is referred to as the "brake play compensation process."

The steering device 50 changes the steering angle of the steering wheels. The steering device 50 includes a steering mechanism 51, a steering actuator 52, and a steering ECU 53. The steering mechanism 51 consists of a linkage mechanism that includes a rack bar, pinion, and steering rods connected (linked) to the steering wheels. The steering actuator 52 includes an electric motor and a steering sensor (not shown). The output shaft of the electric motor is engaged with the steering mechanism 51 (such as the steering rod) via a reduction gear. The steering sensor detects the rotation angle or torque of the electric motor's output shaft.

When the driver manually operates the steering wheel (not shown) to change the steering angle, the ECU 10 sends a steering command (target steering angle) to the steering ECU 53 based on the nature of the operation (steering wheel rotation angle). Additionally, when the steering wheel is not being operated, the ECU 10 can send a predetermined steering command (target steering angle) to the steering ECU 53 if certain conditions are met. In other words, automatic steering is executed when the predetermined conditions are satisfied.

The steering ECU 53 determines (calculates) the target rotation angle (or torque) of the electric motor in the steering actuator 52 based on the steering command (target steering angle) received from the ECU 10. The steering ECU 53 controls the electric motor of the steering actuator 52 so that the output value of the steering sensor matches the target value. In this way, the steering mechanism 51 is driven by the steering actuator 52 (for example, the steering rod is rotationally driven). This reduces the steering effort required by the driver (torque for rotating the steering wheel). Additionally, in automatic steering, the steering angle of the steering wheels is aligned with the target value.

When the steering actuator 52 is not operating (when the target steering angle is "0" (neutral position)), there may be a gap (play) between the components of the steering mechanism 51 (for example, between the rack bar and pinion). In this state, if the ECU 10 sends a steering command to change the steering angle to the steering ECU, it may take a little time for the gap between the components of the steering mechanism 51 to be reduced until they make contact. Therefore, to shorten the time from sending the steering command from the ECU 10 to the steering ECU until the components of the steering mechanism 51 make contact (the time until the steering angle starts to change), the ECU 10 can send a command (play compensation command) to control the steering actuator 52 so that the components of the steering mechanism 51 lightly touch each other (when the change in the steering angle is "0" or minimal) when the target steering angle is "0." In other words, the ECU 10 slightly rotates the output shaft of the electric motor in the steering actuator 52. The ECU 10 determines the rotation direction of the motor based on various conditions. This process is referred to as the "steering mechanism play compensation process."

### (Risk Reduction Function)

When the ignition switch is in the ON state, the ECU 10 periodically obtains various information from the vehicle-mounted sensor 20 and, based on that information, calculates the time to collision (TTC) between the own vehicle and the object OB located in front of the vehicle (inside the FOV). Specifically, the ECU 10 determines whether an object OB is present in front of the own vehicle based on information obtained from the camera 21 and the millimeter-wave radar 22. If the ECU 10 determines that an object OB is present in front of the own vehicle, it obtains the distance D between the own vehicle and the object OB, as well as the relative speed vr (the speed at which the object OB is approaching the own vehicle), based on the information from the camera 21 and the millimeter-wave radar 22. The ECU 10 then calculates the TTC as the distance D divided by the relative speed vr (TTC = D / vr). If the TTC is less than or equal to the threshold TTCth, the ECU 10 executes the following risk reduction processes: alarm processing P1, automatic braking processing P2, and automatic steering processing P3 to reduce the risk of contact between the own vehicle and the object OB.

### (Alarm Processing P1)

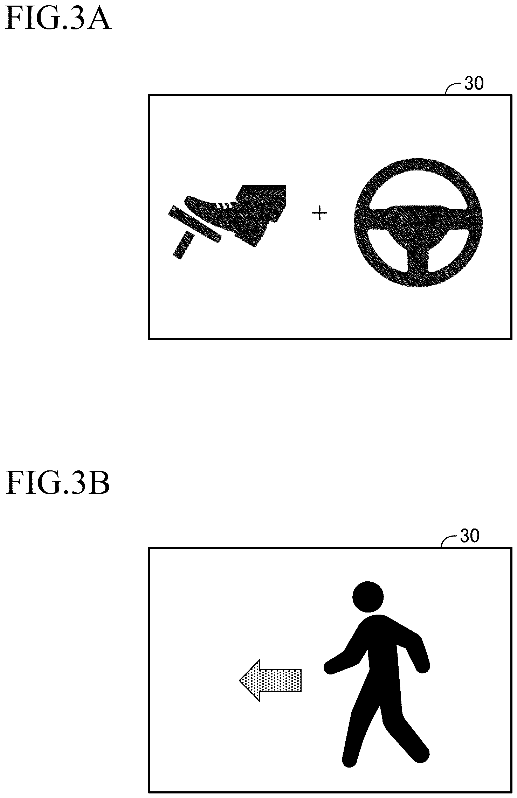

The ECU 10 sends a predetermined alarm command to the notification device 30 to prompt the driver to initiate evasive action to avoid contact between the own vehicle and the object OB. The display device of the notification device 30 displays an image corresponding to the alarm command, such as the icons for the brake pedal and steering wheel shown in FIG. 3A. Additionally, the ECU 10 can calculate the direction in which the steering wheel should be turned based on the positional relationship between the own vehicle and the object OB, and display an icon indicating the direction to turn the steering wheel on the display device. Furthermore, the audio device of the notification device 30 plays an audio message corresponding to the alarm command, such as "Please initiate evasive action."

### (Automatic Braking Processing P2)

The ECU 10 determines the target braking force F based on the TTC. Here, a map M1, which defines the relationship between TTC and the target braking force F, is stored in the ROM 10b. The ECU 10 refers to map M1 to determine the target value F. The map M1 is designed so that the target braking force Fa corresponding to TTCa is greater than the target value Fb corresponding to a larger TTCb. The ECU 10 sends the determined target value F as a braking command to the brake ECU 43.

### (Automatic Steering Processing P3)

The ECU 10 determines the target steering angle θ (including the turning direction) based on the TTC and the direction γ of the object OB relative to the own vehicle. Here, a map M2, which defines the relationship between TTC, direction γ, and the target steering angle θ, is stored in the ROM 10b. The ECU 10 refers to map M2 to determine the target value θ. The map M2 is designed so that the absolute value of the target value θa corresponding to TTCa is greater than the absolute value of the target value θb corresponding to a larger TTCb. The ECU 10 sends the determined target value θ as a steering command to the steering ECU 53.

The ECU 10 interrupts the alarm processing P1, automatic braking processing P2, and automatic steering processing P3 (override processing) if the driver manually initiates a driving operation (evasive action) during the execution of these processes.

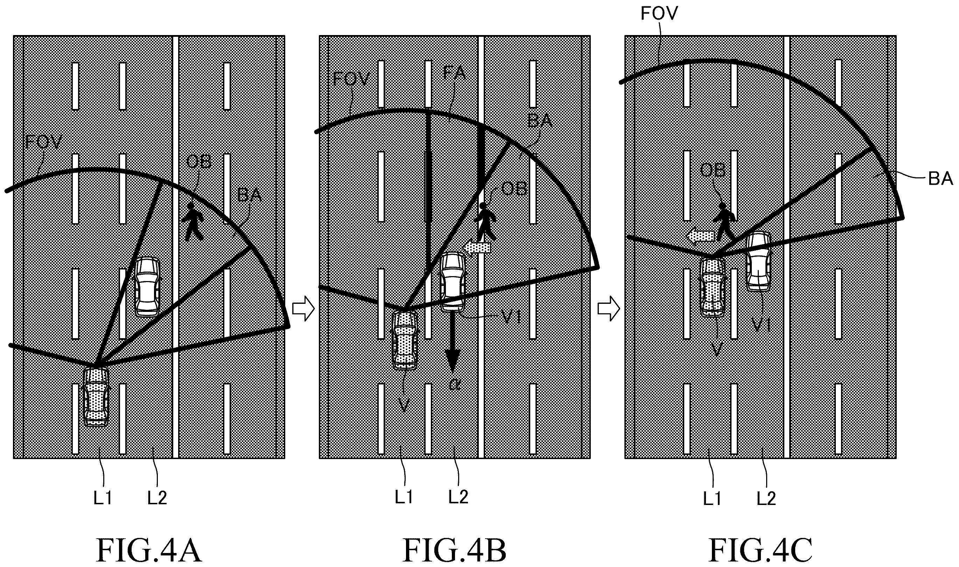

As shown in FIG. 4, a scenario (hereinafter referred to as "specific scene S") is assumed in which the preceding vehicle V1 is traveling in the same direction as the own vehicle in an adjacent lane L2 and is within the FOV of the own vehicle's object detection sensor DS. In this specific scene S, the camera 21 and the millimeter-wave radar 22 cannot detect an object OB located in the blind spot area BA, which is farther than the preceding vehicle V1 from the own vehicle's perspective. Therefore, as shown in FIGS. 4(A) and 4(B), if there are no other objects besides the preceding vehicle V1 within the FOV excluding the blind spot area BA, the ECU 10 does not execute the alarm processing P1, automatic braking processing P2, or automatic steering processing P3. In this example, the preceding vehicle V1 is positioned diagonally in front of the own vehicle and is traveling in the same direction. Thus, the TTC exceeds the threshold TTCth, and the ECU 10 does not execute the alarm processing P1, automatic braking processing P2, or automatic steering processing P3 to reduce the contact risk between the preceding vehicle V1 and the own vehicle.

However, in the specific scene S, if the preceding vehicle V1 is decelerating and the deceleration rate α (rearward acceleration) is relatively high (indicating rapid deceleration) and there are no objects in front of the preceding vehicle V1 that would cause it to decelerate or if the preceding vehicle V1 is not attempting to change lanes, there is a high possibility that an object OB (such as a pedestrian or bicycle) causing the preceding vehicle V1 to decelerate is present in the blind spot area BA. For example, as shown in FIGS. 4(A) and 4(B), a scene is assumed where an object OB (a pedestrian) suddenly enters the forward area of the preceding vehicle V1. Additionally, as shown in FIG. 4(C), there is a possibility that this object OB may also suddenly enter the forward area of the own vehicle.

Therefore, in the specific scene S, if the preceding vehicle V1 is decelerating rapidly and the reason for the rapid deceleration cannot be detected, the ECU 10 executes risk reduction processing to reduce the risk of contact between the own vehicle and the object OB by performing the following processes: warning preparation processing PP1, braking preparation processing PP2, and steering preparation processing PP3.

In this embodiment, the preceding vehicle V1 is considered to be decelerating rapidly when the following condition X1 is met.
[Condition X1]: The deceleration rate α exceeds the threshold αth.

Additionally, in this embodiment, if at least one of the following conditions Y1, Y2, or Y3 regarding the situation in the forward area FA of the preceding vehicle V1 (the presence or absence of specific objects) and the state of the turn signals of the preceding vehicle V1 is met, it is assumed that the cause of the rapid deceleration of the preceding vehicle V1 cannot be detected.
[Condition Y1]: There is no preceding vehicle V2 (a different vehicle than preceding vehicle V1) in the forward area FA.
[Condition Y2]: There is no sign in the forward area FA that regulates the progression of the preceding vehicle V1 (e.g., a traffic signal with a yellow or red light, a stop sign).
[Condition Y3]: The turn signals of the preceding vehicle V1 are not activated.

The ECU 10 sequentially acquires the speed vs1 of the preceding vehicle V1 based on information obtained from the object detection sensor DS and calculates the deceleration rate α based on changes in the speed vs1.

Additionally, the ECU 10 obtains information about objects located in the forward area FA (the section directly ahead of the preceding vehicle V1 in lane L2) from the object detection sensor DS. Furthermore, based on information obtained from the object detection sensor DS, the ECU 10 acquires the operational status of the turn signals of the preceding vehicle V1. The ECU 10 may also obtain information about signs located in the forward area FA based on map information from a navigation system (not shown).

If condition X1 is satisfied and at least one of conditions Y1, Y2, or Y3 is also satisfied, the ECU 10 executes the following warning preparation process PP1, braking preparation process PP2, and steering preparation process PP3.

### (Warning Preparation Process PP1)

The ECU 10 sends a predetermined warning command to the notification device 30 to alert the driver to be cautious of an object OB potentially entering the forward area of the own vehicle from the blind spot area BA. The display device of the notification device 30 displays an image corresponding to the warning command, such as the image shown in FIG. 3B, which represents a scene where an object (pedestrian) suddenly appears. Additionally, the ECU 10 may display an image corresponding to the direction of the blind spot area BA as seen from the own vehicle. Specifically, if the blind spot area BA is located to the right and forward of the own vehicle, the ECU 10 displays an image representing a scene where an object (pedestrian) is moving from right to left (FIG. 3B) on the display device. Conversely, if the blind spot area BA is located to the left and forward of the own vehicle, the ECU 10 displays an image representing a scene where an object (pedestrian) is moving from left to right (an image that mirrors the image shown in FIG. 3B). The audio device of the notification device 30 plays a corresponding audio message, such as "Be cautious of objects suddenly appearing."

### (Braking Preparation Process PP2)

To enhance the responsiveness of the own vehicle to the braking operation (either manual braking by pressing the brake pedal or automatic braking) that is expected to be executed when an object OB suddenly appears in the forward area of the own vehicle from the blind spot area BA, the ECU 10 executes the previously described brake play compensation process.

### (Steering Preparation Process PP3)

To enhance the responsiveness of the own vehicle to the operation of changing the steering angle (either manual steering wheel operation or automatic steering), which is expected to be executed when an object OB jumps into the forward area of the own vehicle from the blind spot area BA, the ECU 10 executes the above-described play compensation process for the steering mechanism.

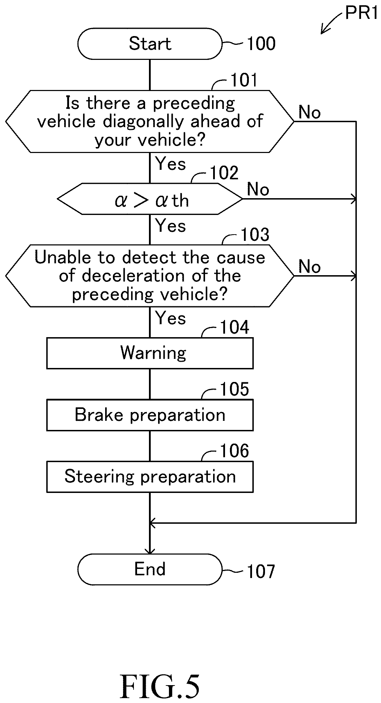

Next, referring to FIG. 5, the program PR1 executed by the CPU 10a (hereinafter simply referred to as "CPU") of the ECU 10 to control the notification device 30, braking device 40, and steering device 50 in preparation for a situation where an object OB jumps out from the blind spot area BA is explained.

The CPU starts executing program PR1 at a predetermined cycle when the ignition switch is ON. The CPU starts executing program PR1 from step 100 and proceeds to step 101.

In step 101, the CPU determines whether the preceding vehicle V1 is present diagonally in front of the own vehicle. If the CPU determines that the preceding vehicle V1 is present diagonally in front of the own vehicle (101: Yes), the process proceeds to step 102. If the CPU determines that the preceding vehicle V1 is not present diagonally in front of the own vehicle (101: No), the process proceeds to step 107, where the execution of program PR1 is terminated.

In step 102, the CPU calculates the deceleration rate α (the absolute value of rearward acceleration) of the preceding vehicle V1 and determines whether the deceleration rate α exceeds the threshold αth (i.e., whether condition X1 is met). If the CPU determines that the deceleration rate α exceeds the threshold αth (102: Yes), the process proceeds to step 103. If the CPU determines that the deceleration rate α does not exceed the threshold αth (102: No), the process proceeds to step 107, where the execution of program PR1 is terminated.

In step 103, the CPU determines whether the reason for the rapid deceleration of the preceding vehicle V1 cannot be detected (i.e., whether at least one of conditions Y1, Y2, or Y3 is met). If the CPU determines that the reason for the deceleration cannot be detected (103: Yes), the process proceeds to step 104. If the CPU determines that the reason for the deceleration can be detected (103: No), the process proceeds to step 107, where the execution of program PR1 is terminated.

In step 104, the CPU executes the warning preparation process PP1. Next, the CPU proceeds to step 105.

In step 105, the CPU executes the braking preparation process PP2. Next, the CPU proceeds to step 106.

In step 106, the CPU executes the steering preparation process PP3. Next, the CPU proceeds to step 107, where the execution of program PR1 is terminated. If it is preferable not to steer the own vehicle (or if the steering direction cannot be predicted) because both preceding vehicle V1a is present diagonally to the right and preceding vehicle V1b is present diagonally to the left of the own vehicle, the CPU skips step 106. Additionally, besides executing program PR1, the CPU also executes a program similar to the conventional system. In other words, if the time TTC until contact between the own vehicle and the detected object OB by the object detection sensor DS is below the threshold, the CPU executes the alarm processing P1, automatic braking processing P2, and automatic steering processing P3.

### (Effects)

In the specific scene S, when the preceding vehicle V1 is rapidly decelerating, and the cause of this deceleration cannot be detected, it is highly likely that an object OB (such as a moving pedestrian or bicycle) exists in the blind spot area BA as the cause of the deceleration. Moreover, this object OB is likely to move into the forward area of the own vehicle. In this embodiment, when the preceding vehicle V1 is rapidly decelerating in the specific scene S and the cause of the deceleration cannot be detected, the ECU 10 executes the warning preparation process, braking preparation process, and steering preparation process as part of the risk reduction processing. That is, even if the ECU 10 has not directly detected the object OB, which has a high probability of contacting the own vehicle, the ECU 10 can still initiate risk reduction processing based on the behavior of the preceding vehicle V1 and the surrounding conditions if it can determine that there is a high possibility of the object OB moving from the blind spot area BA into the forward area of the own vehicle. In other words, the ECU 10 can initiate the risk reduction process earlier (before detecting the object) under certain conditions in the specific scene S. According to the vehicle control device 1 configured as described above, it is possible to significantly reduce the contact risk in the specific scene S, where conventional systems could not sufficiently mitigate the contact risk.

The present invention is not limited to the above-described embodiments, and various modifications can be made within the scope of the invention, as described below.

### <Modification Example 1>

In the above embodiment, if any one of conditions Y1 to Y3 is satisfied, it is considered that the cause of the rapid deceleration of the preceding vehicle V1 cannot be detected. Alternatively, it may be considered that the cause of the rapid deceleration of the preceding vehicle V1 cannot be detected only when condition Y1 is satisfied, condition Y2 is satisfied, and condition Y3 is also satisfied.

### <Modification Example 2>

In the above embodiment, the ECU 10 executes the warning processing, automatic braking processing, and automatic steering processing when the object OB is detected. Alternatively, the ECU 10 may be configured to execute only one of the processes (either the warning processing, automatic braking processing, or automatic steering processing) when the object OB is detected.

## Claims

1. A vehicle control device (1) comprising:
a vehicle-mounted sensor (20) for obtaining information about objects around an own vehicle; and
a processor (10) capable of executing risk reduction processing to control the own vehicle so that the contact risk between the own vehicle and the object is reduced based on the information;
wherein the processor is configured to:
in a specific scene (S) where a blind spot area (BA) exists because a preceding vehicle (V1) traveling in the same direction as the own vehicle is present in front of the own vehicle and within the field of view (FOV) of the vehicle-mounted sensor (20), making the vehicle-mounted sensor (20) unable to detect objects,
start the risk reduction processing when a first specific condition (X1), which determines that the preceding vehicle is decelerating rapidly, is satisfied, and a second specific condition (Y1, Y2, Y3), which determines that the cause of the preceding vehicle's deceleration cannot be detected, is satisfied.

2. The vehicle control device according to claim 1, wherein the risk reduction processing includes:
a first process (PP1) for controlling a notification device to enhance the driver's responsiveness to an object (OB) advancing from the blind spot area (BA) to a forward area (FA) where the vehicle-mounted sensor (20) can detect objects in the specific scene (S) where the first specific condition and the second specific condition are satisfied;
a second process (PP2) for controlling a braking device to enhance the responsiveness of the own vehicle's body to braking operations, manually or automatically executed, triggered by the advance of an object from the blind spot area (BA) to the forward area (FA); and
a third process (PP3) for controlling a steering device to enhance the responsiveness of the own vehicle's body to steering angle change operations, manually or automatically executed, triggered by the advance of an object from the blind spot area (BA) to the forward area (FA).

3. The vehicle control device according to claim 2, wherein the first process (PP1) includes a process of presenting information to the driver of the own vehicle indicating that there is a high possibility that an object is advancing from the blind spot area (BA) to the forward area (FA).

4. The vehicle control device according to claim 2 or 3, wherein the braking device (40) includes a brake mechanism (41) for applying braking force to the wheels of the own vehicle, and a brake actuator (42) for driving the brake mechanism, and the second process (PP2) includes a process of driving the brake actuator (42) before the braking operation of the own vehicle is manually or automatically executed so that the braking force is not applied to the wheels.

5. The vehicle control device according to any one of claims 2 to 4, wherein the steering device (50) includes a steering mechanism (51) for changing the steering angle of the own vehicle, and a steering actuator (52) for driving the steering mechanism (51), and the third process (PP3) includes a process of driving the steering actuator (52) before the steering angle change operation of the own vehicle is manually or automatically executed so that the steering angle is not changed.

6. The vehicle control device according to any one of claims 1 to 5, wherein the processor (10) is configured to determine that the second specific condition is satisfied when at least one of the following situations applies:
a situation (Y1) where no moving object is present in a predetermined area in front of the preceding vehicle;
a situation (Y2) where no sign regulating the preceding vehicle's travel is present in the predetermined area; and
a situation (Y3) where the turn signal of the preceding vehicle (V1) is not activated.

7. A vehicle control method comprising:
an information acquisition step for obtaining information about objects (OB) present around the own vehicle using a vehicle-mounted sensor (20); and
a risk reduction step for executing risk reduction processing to control the own vehicle so that the contact risk between the own vehicle and the object (OB) is reduced based on the information;
wherein the risk reduction step includes a start step for starting the risk reduction processing in a specific situation (S) where a blind spot area (BA) exists because a preceding vehicle (V1) traveling in the same direction as the own vehicle is present in front of the own vehicle and within the field of view (FOV) of the vehicle-mounted sensor (20), making the vehicle-mounted sensor (20) unable to detect objects, and a first specific condition (X1), which determines that the preceding vehicle (V1) is decelerating rapidly, is satisfied, and a second specific condition (Y1, Y2, Y3), which determines that the cause of the preceding vehicle's deceleration cannot be detected, is satisfied.

8. A vehicle control program configured to cause a computer provided in the own vehicle to execute:
an information acquisition step for obtaining information about objects (OB) present around the own vehicle using a vehicle-mounted sensor (20); and
a risk reduction step for executing risk reduction processing to control the own vehicle so that the contact risk between the own vehicle and the object (OB) is reduced based on the information;
wherein the risk reduction step includes a start step for starting the risk reduction processing in a specific scene (S) where a blind spot area (BA) exists because a preceding vehicle (V1) traveling in the same direction as the own vehicle is present in front of the own vehicle and within the field of view (FOV) of the vehicle-mounted sensor (20), and a first specific condition (X1), which determines that the preceding vehicle (V1) is decelerating rapidly, is satisfied, and the second specific condition (Y1, Y2, Y3), which determines that the cause of the preceding vehicle's deceleration cannot be detected, is satisfied.
